# EUROPEAN PATENT APPLICATION

(11) **EP 4 579 142 A1**
(43) Date of publication of application: **02.07.2025**
(21) Application number: 23856977.6
(22) Date of filing: 29.06.2023
(51) Int. Cl.: F25B 9/00

(54) **DISASSEMBLY METHOD FOR TWO-STAGE COLD HEAD, AND DISPLACER REMOVAL JIG**

(30) Priority: 24.08.2022 JP 2022133296
(71) Applicant: Sumitomo Heavy Industries, Ltd., Tokyo 141-6025 (JP)
(72) Inventor: KAWAKAMI, Sho, Nishitokyo-shi, Tokyo 188-8585 (JP)
(74) Representative: Louis Pöhlau Lohrentz
(86) International application number: PCT/JP2023/024273
(87) International publication number: WO 2024/042860

(57) **Abstract**

A disassembly method for a two-stage cold head (14) includes: attaching a displacer removal jig (60) to a second-stage displacer (18b) remaining in the two-stage cold head (14); and operating the displacer removal jig (60) such that the second-stage displacer (18b) is pulled out from the cold head (14). The displacer removal jig (60) includes a gripper (70) engageable with the second-stage displacer (18b), and a lifter (80) configured to raise and lower the gripper (70).

## Description

### Technical Field

The present invention relates to a disassembly method for a two-stage cold head and a displacer removal jig.

### Background Art

In the related art, it is known to use a mounting structure including a sleeve for mounting a cryocooler in a cryogenic vacuum chamber such as a cryostat. In the cryogenic vacuum chamber, for example, an object to be cooled such as a superconducting coil is accommodated, and the object to be cooled is in thermal contact with an end of the sleeve. A cold head of the cryocooler is mounted inside the sleeve, and cools the object to be cooled via the sleeve.

During long-term operation of the cryocooler, periodic maintenance of the cryocooler may be required. The cold head is somewhat movable relative to the sleeve, so that the thermal contact between the cold head and the sleeve can be released. The cold head is heated to a temperature convenient for maintenance work, such as room temperature, while the object to be cooled can be maintained at a cryogenic temperature. There is no need to heat and re-cool the object to be cooled to perform the maintenance on the cryocooler, thereby reducing the time required for the maintenance of the cryocooler.

### Citation List

### Patent Literature

[PTL 1] Japanese Unexamined Patent Publication No. 2020-134006

### Summary of Invention

### Technical Problem

The cold head is disassembled during maintenance. For example, in a two-stage Gifford-McMahon (GM) cryocooler, a displacer assembly including a first-stage displacer and a second-stage displacer is pulled out from a cold head. The displacer assembly thus removed is subjected to maintenance such as replacement of worn parts, or is replaced with a new displacer assembly, and the cold head is then reassembled.

However, as an example of an abnormal situation that can occur on-site, there is a case where the second-stage displacer and a second-stage cylinder become engaged for some reason, and the second-stage displacer becomes stuck in the second-stage cylinder and becomes unable to move. As a result, when attempting to pull out the displacer assembly for disassembly, an excessive force may be applied to a connecting portion between the first-stage displacer and the second-stage displacer, and the connecting portion may be damaged. Accordingly, only the first-stage displacer is pulled out, while the second-stage displacer is left inside the cold head. In a case where the second-stage displacer thus remaining in the cold head cannot be removed on-site, the maintenance of the cold head cannot be completed, and an operation of the cryocooler cannot be resumed.

An exemplary object of a certain aspect of the present invention is to provide a disassembly method for a two-stage cold head that enables removal of a second-stage displacer remaining in the two-stage cold head, and a displacer removal jig suitable for the method.

### Solution to Problem

According to an aspect of the present invention, a disassembly method for a two-stage cold head, includes: attaching a displacer removal jig to a second-stage displacer remaining in the two-stage cold head; and operating the displacer removal jig such that the second-stage displacer is pulled out from the two-stage cold head.

According to an aspect of the present invention, there is provided a disassembly method for a two-stage cold head. The two-stage cold head includes a displacer assembly including a first-stage displacer and a second-stage displacer, and a displacer drive shaft connected to the first-stage displacer. The disassembly method includes: attaching a displacer removal jig to the displacer drive shaft; and operating the displacer removal jig such that the displacer assembly is pulled out from the two-stage cold head.

According to an aspect of the present invention, a displacer removal jig includes: a gripper engageable with a second-stage displacer of a two-stage cold head; and a lifter configured to raise and lower the gripper.

### Advantageous Effects of Invention

According to the present invention, it is possible to provide a disassembly method for a two-stage cold head that enables removal of a second-stage displacer remaining in the two-stage cold head, and a displacer removal jig suitable for the method.

### Brief Description of Drawings

Fig. 1 is a view schematically showing a cryocooler according to an embodiment.
Fig. 2 is a view schematically showing the cryocooler according to the embodiment.
Fig. 3 is an exploded perspective view schematically showing an example of a connection structure between a first-stage displacer and a second-stage displacer in a displacer assembly illustrated in Figs. 1 and 2.
Figs. 4A to 4C are views schematically showing a displacer removal jig according to the embodiment.
Figs. 5A and 5B are views schematically showing the displacer removal jig according to the embodiment.
Fig. 6 is a schematic view showing a disassembly method for a cold head according to the embodiment.
Fig. 7 is a schematic view showing the disassembly method for a cold head according to the embodiment.
Figs. 8A and 8B are views schematically showing another example of a gripper of the displacer removal jig according to the embodiment.

### Description of Embodiments

Hereinafter, an embodiment for carrying out the present invention will be described in detail with reference to the drawings. In the description and drawings, identical or equivalent components, members, and processing are denoted by the same reference numerals, and overlapping description is omitted as appropriate. The scale or shape of each part that is shown in the drawings is conveniently set for ease of description and is not limitedly interpreted unless otherwise specified. The embodiments are exemplary and do not limit the scope of the present invention in any way. All characteristics and combinations to be described in the embodiments are not necessarily essential to the invention.

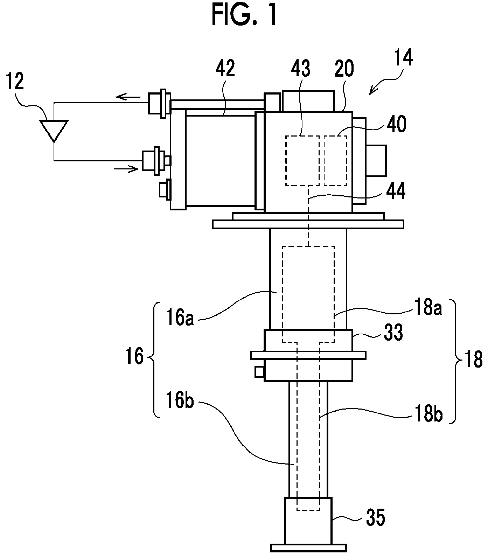

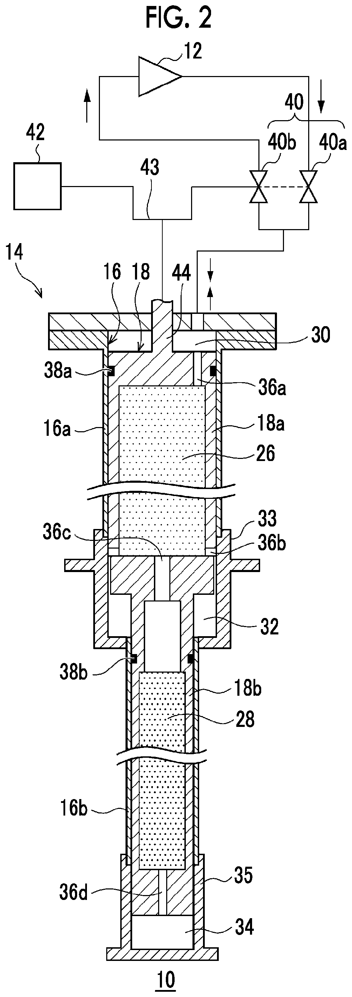

Figs. 1 and 2 are views schematically showing a cryocooler 10 according to the embodiment. Fig. 1 shows an appearance of the cryocooler 10, and Fig. 2 shows an internal structure of the cryocooler 10. The cryocooler 10 is, for example, a two-stage type Gifford-McMahon (GM) cryocooler.

The cryocooler 10 includes a compressor 12 and a two-stage cold head 14. The compressor 12 is configured to collect a working gas of the cryocooler 10 from the cold head 14, pressurize the collected working gas, and supply the working gas to the cold head 14 again. The cold head 14 is also called an expander. The working gas is also called a refrigerant gas, and other suitable gases may be used although a helium gas is typically used.

In general, both a pressure of the working gas supplied from the compressor 12 to the cold head 14 and a pressure of the working gas collected from the cold head 14 to the compressor 12 are considerably higher than the atmospheric pressure, and can be referred to as a first high pressure and a second high pressure, respectively. For convenience of description, the first high pressure and the second high pressure are also simply referred to as a high pressure and a low pressure, respectively. Typically, the high pressure is, for example, 2 to 3 MPa. The low pressure is, for example, 0.5 to 1.5 MPa and is, for example, about 0.8 MPa. For the sake of understanding, a flow direction of the working gas is indicated by an arrow.

The cold head 14 includes a cryocooler cylinder 16 and a displacer assembly 18. The cryocooler cylinder 16 guides linear reciprocating motion of the displacer assembly 18, and forms an expansion chamber (32, 34) for the working gas in a space with the displacer assembly 18. In addition, the cold head 14 includes a pressure switching valve 40 that determines an intake start timing of the working gas into the expansion chamber and an exhaust start timing of the working gas from the expansion chamber.

In the present specification, in order to describe a positional relationship between components of the cryocooler 10, for convenience of description, a side close to a top dead center of axial reciprocating motion of a displacer will be referred to as "up" and a side close to a bottom dead center will be referred to as "down". The top dead center is a position of the displacer at which a volume of an expansion space is maximum, and the bottom dead center is a position of the displacer at which the volume of the expansion space is minimum. During an operation of the cryocooler 10, a temperature gradient occurs in which the temperature decreases from an upper side to a lower side in an axial direction, so the upper side can also be referred to as a high temperature side and the lower side as a low temperature side.

The cryocooler cylinder 16 includes a first-stage cylinder 16a and a second-stage cylinder 16b. The first-stage cylinder 16a and the second-stage cylinder 16b are, for example, members having a cylindrical shape, and the second-stage cylinder 16b has a smaller diameter than the first-stage cylinder 16a. The first-stage cylinder 16a and the second-stage cylinder 16b are coaxially disposed, and a lower end of the first-stage cylinder 16a is rigidly connected to an upper end of the second-stage cylinder 16b.

The displacer assembly 18 includes a first-stage displacer 18a and a second-stage displacer 18b that are connected to each other and move integrally. The first-stage displacer 18a and the second-stage displacer 18b are, for example, members having a cylindrical shape, and the second-stage displacer 18b has a smaller diameter than the first-stage displacer 18a. The first-stage displacer 18a and the second-stage displacer 18b are coaxially disposed.

The first-stage displacer 18a is accommodated in the first-stage cylinder 16a, and the second-stage displacer 18b is accommodated in the second-stage cylinder 16b. The first-stage displacer 18a is capable of reciprocating in the axial direction along the first-stage cylinder 16a, and the second-stage displacer 18b is capable of reciprocating in the axial direction along the second-stage cylinder 16b.

As shown in Fig. 2, the first-stage displacer 18a accommodates a first regenerator 26. The first regenerator 26 is formed by filling a tubular main body of the first-stage displacer 18a with a metal mesh made of copper or the like or other suitable first regenerator material. An upper lid portion and a lower lid portion of the first-stage displacer 18a may be provided as separate members from the main body of the first-stage displacer 18a, and the upper lid portion and the lower lid portion of the first-stage displacer 18a may be fixed to the main body by appropriate means such as fastening or welding, thereby allowing the first regenerator material to be accommodated in the first-stage displacer 18a.

Similarly, the second-stage displacer 18b accommodates a second regenerator 28. The second regenerator 28 is formed by filling a tubular main body of the second-stage displacer 18b with a non-magnetic regenerator material such as bismuth, a magnetic regenerator material such as HoCu₂, or other suitable second regenerator material. The second regenerator material may be formed in a granular shape. An upper lid portion and a lower lid portion of the second-stage displacer 18b may be provided as separate members from the main body of the second-stage displacer 18b, and the upper lid portion and the lower lid portion of the second-stage displacer 18b may be fixed to the main body by appropriate means such as fastening and welding, thereby allowing the second regenerator material to be accommodated in the second-stage displacer 18b.

The displacer assembly 18 forms a room temperature chamber 30, a first expansion chamber 32, and a second expansion chamber 34 inside the cryocooler cylinder 16. The cold head 14 includes a first cooling stage 33 and a second cooling stage 35 for heat exchange with a desired object or medium to be cooled by the cryocooler 10. The room temperature chamber 30 is formed between the upper lid portion of the first-stage displacer 18a and an upper portion of the first-stage cylinder 16a. The first expansion chamber 32 is formed between the lower lid portion of the first-stage displacer 18a and the first cooling stage 33. The second expansion chamber 34 is formed between the lower lid portion of the second-stage displacer18b and the second cooling stage 35. The first cooling stage 33 is fixed to a lower portion of the first-stage cylinder 16a to surround the first expansion chamber 32, and the second cooling stage 35 is fixed to a lower portion of the second-stage cylinder 16b to surround the second expansion chamber 34. The first cooling stage 33 and the second cooling stage 35 are formed of, for example, pure copper (for example, oxygen-free copper or tough pitch copper) or other high thermal conductivity metal.

The first regenerator 26 is connected to the room temperature chamber 30 through a working gas flow path 36a formed in the upper lid portion of the first-stage displacer 18a, and is connected to the first expansion chamber 32 through a working gas flow path 36b formed in the lower lid portion of the first-stage displacer 18a. The second regenerator 28 is connected to the first regenerator 26 through the working gas flow path 36c formed from the lower lid portion of the first-stage displacer 18a to the upper lid portion of the second-stage displacer 18b. In addition, the second regenerator 28 is connected to the second expansion chamber 34 through a working gas flow path 36d formed in the lower lid portion of the second-stage displacer 18b.

A first seal 38a and a second seal 38b may be provided so that working gas flows between the first expansion chamber 32, the second expansion chamber 34 and the room temperature chamber 30 are guided to the first regenerator 26 and the second regenerator 28, rather than to a clearance between the cryocooler cylinder 16 and the displacer assembly 18. The first seal 38a may be mounted on the upper lid portion of the first-stage displacer 18a to be disposed between the first-stage displacer 18a and the first-stage cylinder 16a. The second seal 38b may be mounted on the upper lid portion of the second-stage displacer 18b to be disposed between the second-stage displacer 18b and the second-stage cylinder 16b.

As shown in Fig. 1, the cold head 14 includes a cryocooler housing 20 that accommodates the pressure switching valve 40. The cryocooler housing 20 is coupled to the cryocooler cylinder 16, thereby forming a hermetic container that accommodates the pressure switching valve 40 and the displacer assembly 18. The cryocooler housing 20 and the cryocooler cylinder 16 are formed of, for example,
a metal material such as stainless steel or other suitable high-strength material so as to withstand a pressure difference between an inside and an outside of the hermetic container.

As shown in Fig. 2, the pressure switching valve 40 includes a high pressure valve 40a and a low pressure valve 40b, and is configured to generate periodic pressure fluctuations in the cryocooler cylinder 16. A working gas discharge port of the compressor 12 is connected to the room temperature chamber 30 via the high pressure valve 40a, and a working gas suction port of the compressor 12 is connected to the room temperature chamber 30 via the low pressure valve 40b. The high pressure valve 40a and the low pressure valve 40b are configured to open and close selectively and alternately (that is, such that when one is open, the other is closed).

The pressure switching valve 40 may be of a rotary valve type. That is, the pressure switching valve 40 may be configured such that the high pressure valve 40a and the low pressure valve 40b are alternately opened and closed by rotational sliding of a valve disc relative to a stationary valve main body. In this case, an expander motor 42 may be connected to the pressure switching valve 40 to rotate the valve disc of the pressure switching valve 40. For example, the pressure switching valve 40 is disposed such that a valve rotation axis is coaxial with a rotation axis of the expander motor 42.

Alternatively, the high pressure valve 40a and the low pressure valve 40b may be valves that can be individually controlled. In this case, the pressure switching valve 40 does not need to be connected to the expander motor 42.

The cold head 14 includes the expander motor 42 and a motion conversion mechanism 43. The expander motor 42 is a drive source that drives the cold head 14, and is, for example, an electric motor that is driven by three-phase alternating current. The expander motor 42 is attached to the cryocooler housing 20. The motion conversion mechanism 43 is accommodated in the cryocooler housing 20 like the pressure switching valve 40.

The expander motor 42 is connected to a displacer drive shaft 44 via the motion conversion mechanism 43 such as a Scotch yoke mechanism. The motion conversion mechanism 43 converts rotary motion output by the expander motor 42 into linear reciprocating motion of the displacer drive shaft 44. The displacer drive shaft 44 extends from the motion conversion mechanism 43 into the room temperature chamber 30, and is fixed to the upper lid portion of the first-stage displacer 18a. Rotation of the expander motor 42 is converted into axial reciprocating motion of the displacer drive shaft 44 by the motion conversion mechanism 43, and the displacer assembly 18 linearly reciprocates in the cryocooler cylinder 16 in the axial direction.

With the above configuration, when the compressor 12 and the expander motor 42 are operated, the cryocooler 10 generates periodic volume fluctuations in the first expansion chamber 32 and the second expansion chamber 34 and pressure fluctuations of the working gas synchronized with the periodic volume fluctuations. Typically, in an intake process, the low pressure valve 40b is closed and the high pressure valve 40a is opened, whereby the working gas at a high pressure flows from the compressor 12 into the room temperature chamber 30 through the high pressure valve 40a, is supplied to first expansion chamber 32 through the first regenerator 26, and is supplied to the second expansion chamber 34 through the second regenerator 28. In this manner, the first expansion chamber 32 and the second expansion chamber 34 are pressurized from a low pressure to a high pressure. In this case, the displacer assembly 18 is moved upward from the bottom dead center to the top dead center, and volumes of the first expansion chamber 32 and the second expansion chamber 34 are increased. When the high pressure valve 40a is closed, the intake process ends.

In an exhaust process, the high pressure valve 40a is closed and the low pressure valve 40b is opened, whereby the first expansion chamber 32 and the second expansion chamber 34 at a high pressure are opened to the working gas suction port at a low pressure of the compressor 12. Accordingly, the working gas expands in the first expansion chamber 32 and the second expansion chamber 34, and as a result, the working gas having a low pressure is discharged from the first expansion chamber 32 and the second expansion chamber 34 to the room temperature chamber 30 through the first regenerator 26 and the second regenerator 28. In this case, the displacer assembly 18 is moved downward from the top dead center to the bottom dead center, and the volumes of the first expansion chamber 32 and the second expansion chamber 34 are reduced. The working gas is collected from the cold head 14 to the compressor 12 through the low pressure valve 40b. When the low pressure valve 40b is closed, the exhaust process ends.

In this manner, for example, a refrigeration cycle such as a GM cycle is configured, and the first cooling stage 33 and the second cooling stage 35 are cooled to a desired cryogenic temperature. The first cooling stage 33 may be cooled to a first cooling temperature in a range of, for example, about 30K to about 70K. The second cooling stage 35 can be cooled to a second cooling temperature (for example, about 1 K to about 4 K) lower than the first cooling temperature.

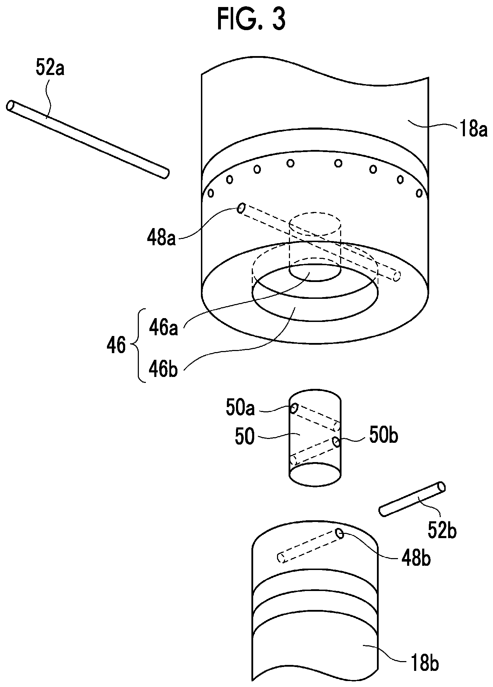

Fig. 3 is an exploded perspective view schematically showing an example of a connection structure between the first-stage displacer 18a and the second-stage displacer 18b in the displacer assembly 18 shown in Figs. 1 and 2. As shown in the figure, a cylindrical recessed portion 46 is provided at a low temperature end (lower lid portion in Figs. 1 and 2) of the first-stage displacer 18a coaxially with a center axis of the first-stage displacer 18a. The recessed portion 46 has a small-diameter portion 46a on the upper side and a large-diameter portion 46b on the lower side. Furthermore, at the low temperature end of the first-stage displacer 18a, a first-stage displacer pin hole 48a that penetrates the first-stage displacer 18a and the small-diameter portion 46a of the recessed portion 46 in the radial direction perpendicular to the center axis of the first-stage displacer 18a.

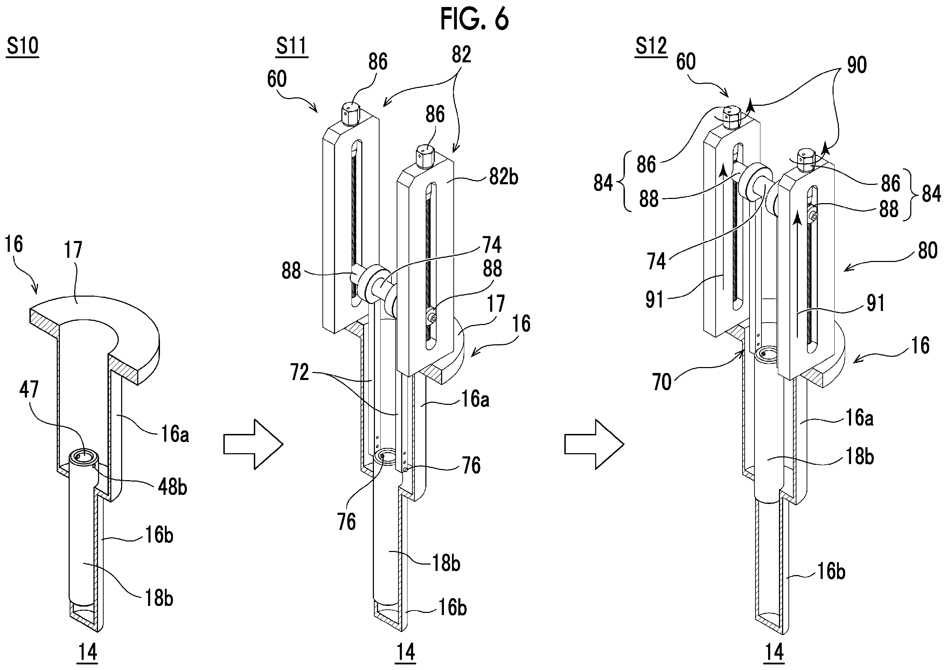

In addition, at a high temperature end (upper lid portion in Figs. 1 and 2) of the second-stage displacer 18b, a cylindrical recessed portion 47 (see Fig. 6) is provided coaxially with a center axis of the second-stage displacer 18b. Furthermore, at the high temperature end of the second-stage displacer 18b, a second-stage displacer pin hole 48b that penetrates the second-stage displacer 18b and the recessed portion 47 in the radial direction perpendicular to the center axis of the second-stage displacer 18b.

A short columnar connecting body 50 is provided between the first-stage displacer 18a and the second-stage displacer 18b. At one end portion (upper end in Fig. 3) of the connecting body 50, a first pin hole 50a penetrating one end portion of the connecting body 50 in the radial direction perpendicular to a center axis of the connecting body 50 is provided, and at the other end portion (lower end in Fig. 3) of the connecting body 50, a second pin hole 50b penetrating the other end portion of the connecting body 50 in the radial direction perpendicular to a center axis of the connecting body 50 is provided. The first pin hole 50a and the second pin hole 50b are provided at different positions along the center axis of the connecting body 50 so as to be perpendicular to each other.

One end portion of the connecting body 50 can be inserted into the small-diameter portion 46a of the recessed portion 46 provided in the first-stage displacer 18a, and the first pin hole 50a communicates with the first-stage displacer pin hole 48a when the connecting body 50 is inserted. A first connecting pin 52a is inserted into the first-stage displacer pin hole 48a and the first pin hole 50a such that the connecting body 50 is connected to the first-stage displacer 18a. In addition, the other end portion of the connecting body 50 can be inserted into the recessed portion of the second-stage displacer 18b, and the second pin hole 50b communicates with the second-stage displacer pin hole 48b when the connecting body 50 is inserted. A second connecting pin 52b is inserted into the second-stage displacer pin hole 48b and the second pin hole 50b such that the connecting body 50 is connected to the second-stage displacer 18b. In this manner, the first-stage displacer 18a and the second-stage displacer 18b are connected to each other with the connecting body 50.

The connection structure between the first-stage displacer 18a and the second-stage displacer 18b can also adopt other configurations. For example, it is not essential to use the connecting body 50, and the second-stage displacer 18b may be inserted into the recessed portion 46 of the first-stage displacer 18a, and the first-stage displacer 18a and the second-stage displacer 18b may be connected to each other by a single connecting pin.

As described at the beginning of the present specification, the cold head 14 may be disassembled for maintenance of the cryocooler 10. In this case, fastening of the cryocooler housing 20 and the cryocooler cylinder 16 is released, and the cryocooler housing 20 is lifted from the cryocooler cylinder 16. The displacer assembly 18 is also pulled up along with a displacer drive mechanism such as the expander motor 42 and the motion conversion mechanism 43 in the cryocooler housing 20 relative to the cryocooler cylinder 16. In this manner, the first-stage displacer 18a and the second-stage displacer 18b are pulled out from the first-stage cylinder 16a and the second-stage cylinder 16b, respectively, and finally, the cryocooler housing 20 and the displacer assembly 18 are removed from the cold head 14.

However, as an example of an abnormal situation that can occur on-site, there is a case where the second-stage displacer 18b and the second-stage cylinder 16b become engaged for some reason, and the second-stage displacer 18b becomes stuck in the second-stage cylinder 16b and becomes unable to move. As a result, when attempting to pull out the displacer assembly 18 from the cryocooler cylinder 16 for disassembly, an excessive force may be applied to a connecting portion between the first-stage displacer 18a and the second-stage displacer 18b, and the connecting portion may be damaged (for example, the second connecting pin 52b may break). There is a case where only the first-stage displacer 18a is pulled out and the second-stage displacer 18b is left in the second-stage cylinder 16b. When the second-stage displacer 18b remains in the cold head 14, the maintenance of the cold head 14 cannot be completed, and the operation of the cryocooler 10 cannot be resumed.

Therefore, in the present embodiment, a disassembly method for the cold head 14 that can be easily performed on-site is proposed. In this method, it is possible to remove the second-stage displacer 18b remaining in the cold head 14 by using a displacer removal jig 60, which will be described below.

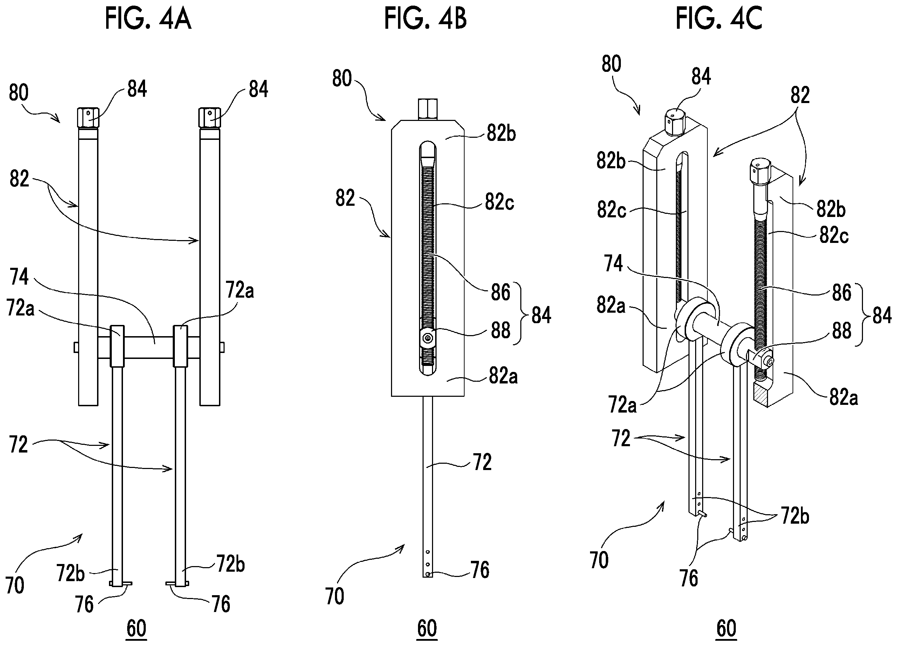

Figs. 4A to 4C are views schematically showing the displacer removal jig 60 according to the embodiment. Fig. 4A is a front view of the displacer removal jig 60, Fig. 4B is a side view of the displacer removal jig 60, and Fig. 4C is a partially cutaway perspective view of the displacer removal jig 60.

The displacer removal jig 60 includes a gripper 70 that is engageable with the second-stage displacer 18b of the cold head 14, and a lifter 80 that is configured to raise and lower the gripper 70.

The gripper 70 includes two longitudinal rods 72 extending parallel to each other in a longitudinal direction (up-down direction in the figure) and a traverse cross rod 74 extending in a transverse direction, which is a direction perpendicular to the longitudinal direction, to support the longitudinal rods 72. Each of the longitudinal rods 72 includes a base portion 72a and a tip portion 72b. The longitudinal rod 72 has a rectangular cross section in this example, but may have another cross-sectional shape.

The base portion 72a of the longitudinal rod 72 has a ring shape having a through-hole for receiving the traverse cross rod 74 at a center portion thereof. The traverse cross rod 74 is inserted into the through-hole of the base portion 72a of the longitudinal rod 72, whereby the longitudinal rod 72 is connected to the traverse cross rod 74 so as to be movable in the transverse direction relative to the traverse cross rod 74. In this example, the traverse cross rod 74 has a circular cross section, and the through-hole of the base portion 72a of the longitudinal rod 72 also has the same circular cross section, so that the longitudinal rod 72 is also rotatable around the traverse cross rod 74. The traverse cross rod 74 may have another cross-sectional shape such as a rectangular cross section, and the through-hole of the base portion 72a of the longitudinal rod 72 may also have a shape corresponding to the other cross-sectional shape.

In addition, the gripper 70 includes a gripping pin 76 having a shape determined to be insertable into the second-stage displacer pin hole 48b. Therefore, the gripping pin 76 has a shape corresponding to the second-stage displacer pin hole 48b. For example, in a case where the second-stage displacer pin hole 48b is a round hole, the gripping pin 76 is a correspondingly columnar pin.

The gripping pin 76 is provided in each of the longitudinal rods 72, that is, in the present embodiment, two gripping pins 76 are provided in the gripper 70. A gripping pin hole into which a gripping pin 76 is inserted is provided in the tip portion 72b of the longitudinal rod 72. The gripping pin hole penetrates the tip portion 72b of the longitudinal rod 72 in the transverse direction. The gripping pin 76 is mounted on the longitudinal rod 72 by being inserted into the gripping pin hole.

The gripping pin 76 is replaceable. That is, the gripping pin 76 is mounted on the longitudinal rod 72 in a removable manner. As necessary, the mounted gripping pin 76 can be pulled out from the gripping pin hole, and another gripping pin 76 (for example, a new gripping pin 76) can be newly inserted into the gripping pin hole and mounted on the longitudinal rod 72. In a disassembly method for a cold head described later, when the second-stage displacer 18b is pulled out from the second-stage cylinder 16b, a large force is applied to the gripping pin 76, and the gripping pin 76 may be deformed. By replacing the deformed, used gripping pin 76 with another undeformed gripping pin 76, the same displacer removal jig 60 can be used for the next cold head disassembly work.

The lifter 80 includes a support body 82 and a feed screw mechanism 84 incorporated in the support body 82. As shown in the figure, the support body 82 is made up of two support rods extending parallel to each other in the longitudinal direction, and each support rod includes a base portion 82a and a tip portion 82b. A slit 82c extending in the longitudinal direction from the base portion 82a to the tip portion 82b is provided in each support rod.

The feed screw mechanism 84 includes a feed screw 86 rotatably supported by the support body 82 and a nut portion 88 screwed to the feed screw 86, and is configured such that the nut portion 88 moves relative to the support body 82 via the rotation of the feed screw 86 relative to the support body 82. In Fig. 4C, for ease of understanding, one of the support rods of the support body 82 is shown cut away in a plane passing through a center axis of the feed screw 86 and a center axis of the traverse cross rod 74. The feed screw 86 is rotatably supported by the tip portion 82b of the support rod, and extends in the longitudinal direction inside the slit 82c. A screw head 86a of the feed screw 86 is provided on the tip portion 82b of the support rod, and the feed screw mechanism 84 can be operated by rotating the screw head 86a by a worker. A screw portion 86b of the feed screw 86 is disposed inside the slit 82c.

The nut portion 88 is provided at both ends of the transverse cross rod 74 and is a part of the transverse cross rod 74. In a state shown in the figure, the feed screw 86 is screwed into the nut portion 88 at a tip portion of the screw portion 86b of the feed screw 86 close to the base portion 82a of the support rod. The nut portion 88 is disposed in the slit 82c of the support body 82 in a state of being screwed to the feed screw 86, and is movable in the longitudinal direction along the slit 82c via the rotation of the feed screw 86. Movement of the nut portion 88, that is, the transverse cross rod 74 in the longitudinal direction causes the longitudinal rods 72 and the gripping pin 76 supported by the transverse cross rod 74 to move in the longitudinal direction. In this way, the gripper 70 is connected to the nut portion 88 to move integrally with the nut portion 88.

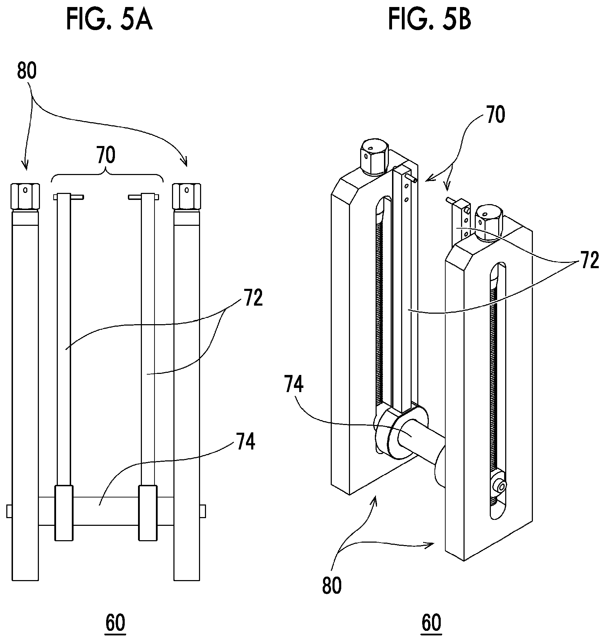

Figs. 5A and 5B are views schematically showing the displacer removal jig 60 according to the embodiment. Fig. 5A is a front view of the displacer removal jig 60, and Fig. 5B is a perspective view of the displacer removal jig 60. Figs. 4A to 4C show the displacer removal jig 60 in a deployed state, and Figs. 5A and 5B show the displacer removal jig 60 in a stored state.

In the stored state shown in Figs. 5A and 5B, the longitudinal rods 72 of the gripper 70 are rotated about 180 degrees around the traverse cross rod 74 and are folded to the lifter 80, compared to the deployed state shown in Figs. 4A to 4C. In this way, the displacer removal jig 60 according to the embodiment is foldable. Accordingly, a length of the displacer removal jig 60 in the longitudinal direction in the stored state is shortened to about half that in the deployed state. In this way, the displacer removal jig 60 is made compact by folding. Accordingly, a storage space for the displacer removal jig 60 can be reduced. This is useful for storing the displacer removal jig 60 when not in use.

The displacer removal jig 60 may be disassembled and stored, for example, by removing the gripper 70 from the lifter 80, instead of folding the displacer removal jig 60.

Fig. 6 is a schematic view showing a disassembly method for the cold head 14 according to the embodiment. For ease of understanding, in Fig. 6, the cryocooler cylinder 16 is shown cut in a plane including a center axis thereof.

As shown in a left part of Fig. 6, the disassembly method is started from a state where only the second-stage displacer 18b is left in the second-stage cylinder 16b of the cryocooler cylinder 16 (S10). This state occurs as a result of damage to the connecting portion between the first-stage displacer 18a and the second-stage displacer 18b, causing only the first-stage displacer 18a to be pulled out from the first-stage cylinder 16a, as described above.

In most cases, the second connecting pin 52b (see Fig. 3) inserted into the second-stage displacer pin hole 48b of the second-stage displacer 18b is assumed to break when the connecting body 50 is pulled up together with the first-stage displacer 18a, and falls out of the second-stage displacer pin hole 48b. However, in a case where the second connecting pin 52b remains in the second-stage displacer pin hole 48b, the second connecting pin 52b is removed from the second-stage displacer pin hole 48b at this stage.

Next, as shown in a center part of Fig. 6, the displacer removal jig 60 is prepared, and as will be described below, the displacer removal jig 60 is attached to the remaining second-stage displacer 18b (S11).

In S11, first, the support body 82 of the displacer removal jig 60 is placed on the cryocooler cylinder 16. The cryocooler cylinder 16 includes a cylinder flange 17 at an upper end (an end portion on a side opposite to the second-stage cylinder 16b) of the first-stage cylinder 16a. The cylinder flange 17 extends radially outward from the upper end of the first-stage cylinder 16a. The support body 82, that is, the base portions 82a of the two support rods are placed on an upper surface of the cylinder flange 17.

The support body 82 is merely placed on the cylinder flange 17 and the support body 82 is not fixed to the cylinder flange 17. However, as necessary, the support body 82 may be fixed to the cylinder flange 17 by an appropriate method such as screwing. In addition, instead of placing or fixing the support body 82 on the cylinder flange 17, a pedestal for placing or fixing the support body 82 may be provided on both sides of the cryocooler cylinder 16, and the support body 82 may be placed or fixed on the pedestal.

In this case, the displacer removal jig 60 is in the deployed state, and the longitudinal rods 72 extend from the traverse cross rod 74 toward a side opposite to the tip portion 82b of the support rod (lower side in the figure). A spacing between the longitudinal rods 72 is adjusted in advance by sliding the longitudinal rods 72 relative to the traverse cross rod 74. The spacing between the longitudinal rods 72 is adjusted to be smaller than an inner diameter of the first-stage cylinder 16a in order to insert the longitudinal rods 72 into the first-stage cylinder 16a. In addition, the spacing between the longitudinal rods 72 is adjusted such that a spacing between tips of the gripping pins 76 is larger than an outer diameter of the second-stage displacer 18b in order to avoid interference between the gripping pins 76 attached to the tip portions 72b and the second-stage displacer 18b.

Therefore, by bringing the support body 82 closer to the cylinder flange 17, the longitudinal rods 72 are inserted into the first-stage cylinder 16a. A length of the longitudinal rod 72 in the longitudinal direction is set to be approximately the same as a depth of the first-stage cylinder 16a. Therefore, when the support body 82 is placed on the cylinder flange 17, the gripping pins 76 attached to the longitudinal rods 72 are disposed at a bottom portion of the first-stage cylinder 16a and are located in the vicinity of the second-stage displacer pin hole 48b at an upper end portion of the remaining second-stage displacer 18b.

Alignment of the gripping pins 76 and the second-stage displacer pin hole 48b in the longitudinal direction can be achieved by rotating the feed screw 86 to finely adjust a position of the nut portion 88, that is, the traverse cross rod 74 in the longitudinal direction. In addition, alignment of the gripping pins 76 and the second-stage displacer pin hole 48b in a circumferential direction can be achieved by moving the displacer removal jig 60 on the cylinder flange 17. In this way, a positional relationship between the gripping pins 76 and the second-stage displacer pin hole 48b can be adjusted such that the two gripping pins 76 are located on both sides of the second-stage displacer pin hole 48b.

Then, the two longitudinal rods 72 are slid relative to the traverse cross rod 74 to interpose the second-stage cylinder 16b therebetween and approach each other in the transverse direction, whereby the two gripping pins 76 are each inserted into the second-stage displacer pin holes 48b. In this way, the gripper 70 is engaged with the second-stage displacer 18b, and the displacer removal jig 60 is attached to the second-stage displacer 18b.

In addition, another attachment method is also possible. The tip portions 72b of the two longitudinal rods 72 to which the gripping pins 76 are attached may be inserted into the recessed portion 47 of the second-stage displacer 18b. Then, the longitudinal rods 72 may be slid relative to the traverse cross rod 74 so as to widen the spacing between the longitudinal rods 72, and the gripping pins 76 may be inserted into the second-stage displacer pin hole 48b from an inside.

Subsequently, as shown in a right part of Fig. 6, the displacer removal jig 60 is operated such that the second-stage displacer 18b is pulled out from the cryocooler cylinder 16 (S12). Specifically, the feed screw 86 is rotated (arrow 90) to raise the nut portion 88, that is, the transverse cross rod 74 (arrow 91), thereby enabling the second-stage displacer 18b gripped by the gripper 70 to be pulled out from the second-stage cylinder 16b.

In this way, the gripper 70 can be pulled up together with the second-stage cylinder 16b by operating the feed screw mechanism 84 of the lifter 80. Thereafter, the displacer removal jig 60 itself is lifted from the cylinder flange 17, whereby the second-stage cylinder 16b can be pulled out and removed from the cryocooler cylinder 16. Another functioning displacer assembly 18 (for example, a new displacer assembly 18) can be prepared and used to reassemble the cold head 14 on-site.

Therefore, according to the embodiment, by using the displacer removal jig 60, it is possible to provide the disassembly method for the cold head 14 using the displacer removal jig 60 for removing the second-stage displacer 18b remaining in the cold head 14. Even in a case where the second-stage displacer 18b is left in the cryocooler cylinder 16, maintenance of the cold head 14 can be completed on-site without removing the cold head 14 as a whole from a cryogenic device to which the cold head 14 is attached, and the operation of the cryocooler 10 can be resumed.

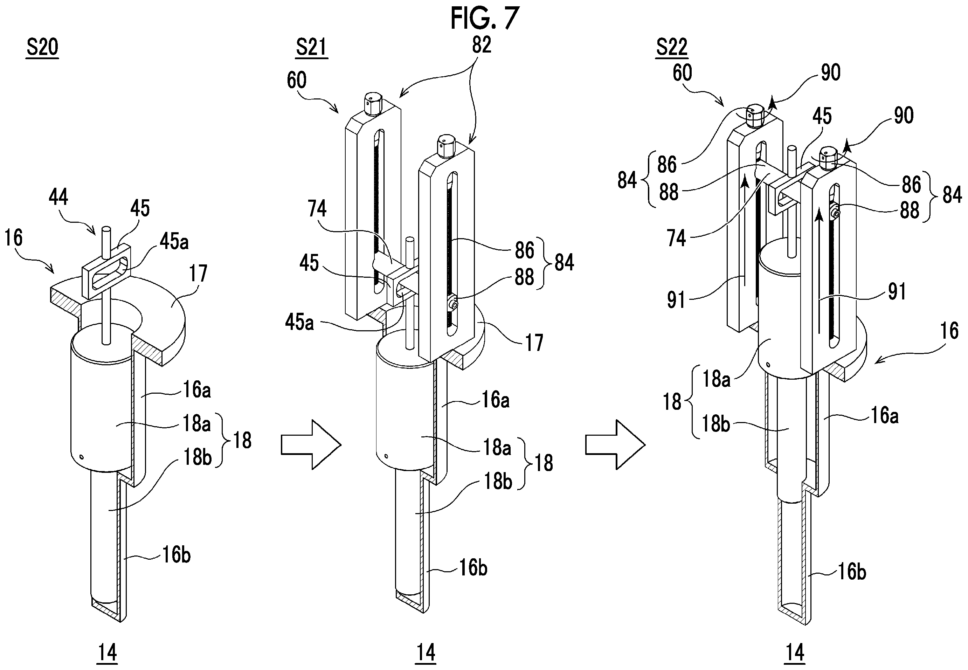

Fig. 7 is a schematic view showing the disassembly method for the cold head 14 according to the embodiment. The displacer removal jig 60 can be used not only to remove the second-stage displacer 18b remaining in the cryocooler cylinder 16 but also to remove the undamaged displacer assembly 18. Hereinafter, a method for removing the displacer assembly 18 from the cold head 14 using the displacer removal jig 60 will be described.

A typical example of the motion conversion mechanism 43 for driving the displacer assembly 18 is a Scotch yoke mechanism. In this case, the displacer drive shaft 44 connected to the first-stage displacer 18a has a scotch yoke plate 45. The scotch yoke plate 45 is provided with a transverse elongated window 45a for allowing reciprocating motion of a crank pin (not shown) of the scotch yoke mechanism.

The disassembly method shown in Fig. 7 is started from a state where the displacer assembly 18 is housed in the cryocooler cylinder 16 as shown in a left part of the same figure (S20). Therefore, the first-stage displacer 18a is disposed in the first-stage cylinder 16a, and the second-stage displacer 18b is disposed in the second-stage cylinder 16b. The displacer drive shaft 44 having the scotch yoke plate 45 protrudes from the first-stage displacer 18a toward an outside of the cryocooler cylinder 16.

Next, as shown in a center part of Fig. 7, the displacer removal jig 60 is prepared, and the displacer removal jig 60 is attached to the scotch yoke plate 45 (S21). In the method of Fig. 7, unlike the method of Fig. 6, the longitudinal rod 72 is removed from the traverse cross rod 74. As shown in the figure, the feed screw mechanism 84 is assembled to the support body 82 in a state where the traverse cross rod 74 is inserted into the transverse elongated window 45a of the scotch yoke plate 45 (that is, the nut portions 88 at both ends of the traverse cross rod 74 are respectively screwed to the corresponding feed screws 86). The support body 82 is placed on the cylinder flange 17.

Subsequently, as shown in a right part of Fig. 7, the displacer removal jig 60 is operated such that the displacer assembly 18 is pulled out from the cryocooler cylinder 16 (S22). Specifically, the feed screw 86 is rotated (arrow 90) to raise the nut portion 88, that is, the traverse cross rod 74 is raised (arrow 91), thereby enabling the scotch yoke plate 45 and the displacer assembly 18 to be pulled up from the cryocooler cylinder 16. Thereafter, the displacer removal jig 60 itself is lifted from the cylinder flange 17, whereby the displacer assembly 18 can be pulled out and removed from the cryocooler cylinder 16.

The present invention has been described hereinbefore based on the examples. It will be understood by those skilled in the art that the present invention is not limited to the above embodiments, various design changes can be made, various modification examples are possible, and such modification examples are also within the scope of the present invention. Various features described in relation to a certain embodiment are also applicable to other embodiments. A new embodiment generated through combination also has the effects of each of the combined embodiments.

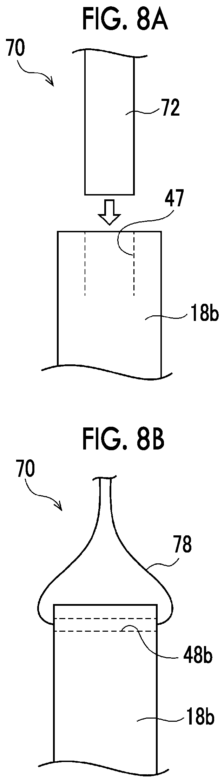

In the above-described embodiment, the gripper 70 of the displacer removal jig 60 adopts a configuration in which the gripping pins 76 are attached to the tip portions 72b of the longitudinal rods 72, but other configurations are also possible. For example, as shown in Fig. 8A, the gripper 70 may include one longitudinal rod 72, and the longitudinal rod 72 may be coupled to the second-stage displacer 18b. For example, a tip of the longitudinal rod 72 may be fitted into the recessed portion 47 of the second-stage displacer 18b. A screw portion may be formed in the tip of the longitudinal rod 72, and the longitudinal rod 72 may be coupled to the second-stage displacer 18b by causing the screw portion to bite into an inner wall surface of the recessed portion 47 of the second-stage displacer 18b.

Alternatively, as shown in Fig. 8B, the gripper 70 may have a gripping wire 78, and the second-stage cylinder 16b may be gripped by the gripper 70 by inserting the gripping wire 78 into the second-stage displacer pin hole 48b.

Although the present invention has been described using specific phrases based on the embodiment, the embodiment merely shows one aspect of the principles and applications of the present invention, and many modification examples and changes in disposition are allowed without departing from the concept of the present invention specified in the claims.

### Industrial Applicability

The present invention can be used in the field of a disassembly method for a two-stage cold head and a displacer removal jig.

### Reference Signs List

- 14: cold head
- 18b: second-stage displacer
- 60: displacer removal jig
- 70: gripper
- 76: gripping pin
- 80: lifter
- 82: support body
- 84: feed screw mechanism
- 86: feed screw
- 88: nut portion

## Claims

1. A disassembly method for a two-stage cold head, the method comprising:
attaching a displacer removal jig to a second-stage displacer remaining in the two-stage cold head; and
operating the displacer removal jig such that the second-stage displacer is pulled out from the two-stage cold head.

2. The method according to claim 1,
wherein the displacer removal jig includes a gripper engageable with the second-stage displacer, and a lifter configured to raise and lower the gripper,
the attaching includes engaging the gripper with the second-stage displacer, and
the operating includes operating the lifter to raise the gripper.

3. The method according to claim 2,
wherein the gripper includes a gripping pin that is inserted into a pin hole of the second-stage displacer.

4. The method according to claim 3,
wherein the gripping pin is replaceable.

5. The method according to claim 2,
wherein the gripper includes a gripping wire that is inserted into a pin hole of the second-stage displacer.

6. The method according to claim 2,
wherein the gripper includes a longitudinal rod, and
the attaching includes fitting a tip of the longitudinal rod into the second-stage displacer.

7. The method according to claim 2,
wherein the lifter includes a support body, and a feed screw mechanism that includes a feed screw rotatably supported by the support body and a nut portion screwed to the feed screw, and that is configured such that the nut portion moves relative to the support body via rotation of the feed screw,
the gripper is connected to the nut portion to move integrally with the nut portion, and
the operating includes rotating the feed screw.

8. The method according to any one of claims 1 to 7, further comprising:
deploying the displacer removal jig before attaching the displacer removal jig to the second-stage displacer.

9. A disassembly method for a two-stage cold head including a displacer assembly including a first-stage displacer and a second-stage displacer, and a displacer drive shaft connected to the first-stage displacer, the method comprising:
attaching a displacer removal jig to the displacer drive shaft; and
operating the displacer removal jig such that the displacer assembly is pulled out from the two-stage cold head.

10. A displacer removal jig comprising:
a gripper engageable with a second-stage displacer of a two-stage cold head; and
a lifter configured to raise and lower the gripper.
